(19) Europäisches Patentamt

European Patent Office

Office européen des brevets

(11) **EP 0 991 267 A1**

(12) **DEMANDE DE BREVET EUROPEEN**

(43) Date de publication:
**05.04.2000 Bulletin 2000/14**

(51) Int Cl.⁷: **H04N 3/27**, H04N 3/233

(21) Numéro de dépôt: **99410120.2**

(22) Date de dépôt: **29.09.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (71) Demandeur: **STMicroelectronics S.A.**<br>**94250 Gentilly (FR)** |
| | (72) Inventeur: **Moreau, Jean-Michel**<br>**38000 Grenoble (FR)** |
| (30) Priorité: **30.09.1998 FR 9812398** | (74) Mandataire: **de Beaumont, Michel**<br>**1, rue Champollion**<br>**38000 Grenoble (FR)** |

(54) **Circuit de balayage d'un tube cathodique à correction de géomètrie indépendante de la fréquence de balayage**

(57) L'invention concerne un circuit de balayage ligne d'un tube cathodique, comprenant, en série entre les bornes d'un interrupteur (T), deux circuits oscillants de même constante de temps comportant chacun, en parallèle, un condensateur (Cr, Crm), une diode connectée en anti-parallèle (D, Dm), et une association série d'une inductance (Ld, Lm) et d'une source de tension (Cs, Cm), l'inductance (Ld) d'un premier des circuits oscillants étant une bobine de balayage du tube cathodique ; et des moyens (12) pour régler la source de tension (Cm) du deuxième circuit oscillant. Les moyens de réglage comprennent un amplificateur (12) recevant une tension de consigne (Vc) et utilisant, en tant que contre-réaction, une tension prélevée sur l'un des circuits oscillants (Lm, Crm).

Fig 4

EP 0 991 267 A1

## Description

La présente invention concerne un circuit de balayage ligne de tube cathodique, et plus particulièrement un circuit permettant d'utiliser une même consigne de correction de géométrie quelle que soit la fréquence de balayage utilisée, notamment dans les moniteurs informatiques.

Des circuits de balayage classiques sont décrits dans divers ouvrages de référence, parmi lesquels ont peut mentionner "Nouveau guide de la télévision en couleurs", éditions Chiron, Tome 2, pages 197-207, 1981.

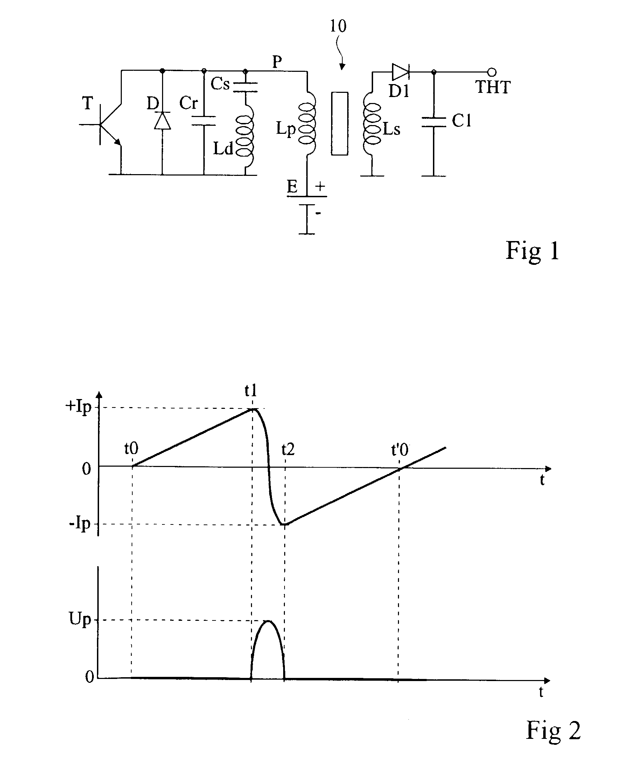

La figure 1 représente un circuit de balayage classique du type qui génère également la très haute tension (THT) pour le tube cathodique. Entre un noeud P et la masse on trouve, connectés en parallèle, un interrupteur T, une diode D en antiparallèle, et un condensateur de retour Cr. La bobine de balayage, Ld, est connectée en série avec un condensateur Cs entre le noeud P et la masse. Le condensateur Cs a une valeur grande par rapport au condensateur Cr.

Par ailleurs, l'enroulement primaire Lp d'un transformateur élévateur 10 est relié en série avec une source de tension d'alimentation E entre le noeud P et la masse. La très haute tension THT est prélevée aux bornes de l'enroulement secondaire Ls du transformateur 10, redressée par une diode D1 et filtrée par un condensateur C1.

La figure 2 représente l'allure du courant de déviation circulant dans la bobine Ld et la tension correspondante prélevée sur le noeud P. Généralement, l'inductance de l'enroulement primaire Lp du transformateur élévateur 10 est si importante qu'elle peut être considérée comme une impédance infinie. De même, le condensateur Cs a une valeur telle qu'il peut être considéré comme une source de tension de faible impédance fournissant une tension sensiblement égale à la tension d'alimentation E (en fait, le condensateur Cs est maintenu chargé à la valeur E par l'intermédiaire de la source d'alimentation E et les enroulements Lp et Ld).

A un instant t0, l'interrupteur T est fermé et le courant dans la bobine Ld est nul. La bobine Ld se trouve connectée aux bornes du condensateur Cs fournissant la tension E sensiblement constante. Le courant dans le condensateur Ld croît linéairement avec une pente E/Ld.

A un instant tl, l'interrupteur T est ouvert. Le courant dans la bobine Ld a atteint une valeur crête Ip égale à $E \cdot t1/Ld$ (en supposant que t0 = 0). La bobine Ld est maintenant connectée en circuit oscillant LC avec le condensateur Cr, d'où il résulte que le courant dans la bobine varie de manière sinusoïdale pour atteindre une valeur -Ip à un instant t2. L'intervalle t1-t2 correspond à une demi sinusoïde de constante de temps $\sqrt{(Ld \cdot Cr)}$. Il correspond en outre à un retour ligne qui est de durée faible par rapport à la durée de balayage ligne.

Pendant cet intervalle t1-t2, la tension au noeud P varie selon une alternance de sinusoïde d'amplitude $Up = E \cdot t1/\sqrt{(Ld \cdot Cr)}$. Cette alternance est appliquée sur l'enroulement primaire du transformateur élévateur 10 pour être convertie en très haute tension.

A l'instant t2, la tension sur le noeud P tend à devenir négative pour amorcer une alternance de sinusoïde négative. Alors, la diode D devient passante et dérive tout le courant provenant de la bobine Ld. La bobine Ld se trouve de nouveau connectée aux bornes de la source de tension constituée par le condensateur Cs, de manière que le courant se met à croître linéairement avec une pente de E/Ld pour traverser la valeur 0 à un instant t'0 où le cycle recommence. On remarquera que l'intervalle t2-t'0 a la même durée t1 que l'intervalle t0-t1.

Dans certaines applications, notamment dans les moniteurs informatiques, on doit pouvoir faire varier la fréquence de balayage, c'est-à-dire le temps t1. Dans le circuit de la figure 1, on constate que le courant de balayage crête Ip et la tension crête Up sont inversement proportionnels à la fréquence de balayage. Or il n'est pas question de modifier le courant crête Ip, car il détermine l'amplitude de balayage horizontal, ni la tension crête Up, car elle détermine la haute tension qui doit être maintenue sensiblement constante. A priori, il suffirait de faire varier la tension d'alimentation E proportionnellement à la fréquence pour maintenir constantes l'amplitude de balayage et la haute tension.

Toutefois, on doit pouvoir régler la largeur de l'image et apporter des corrections de géométrie. Par exemple, si l'amplitude du courant de balayage était maintenue constante sur la hauteur de l'image, les bords de l'image auraient une forme parabolique, lequel défaut est corrigé en modulant l'amplitude du courant de balayage de manière parabolique complémentaire.

En d'autres termes, à fréquence de balayage fixe, on doit pouvoir moduler l'amplitude du courant de balayage sans modifier la valeur de la haute tension.

On a donc, dans l'art antérieur, perfectionné le circuit de la figure 1 pour permettre cela.

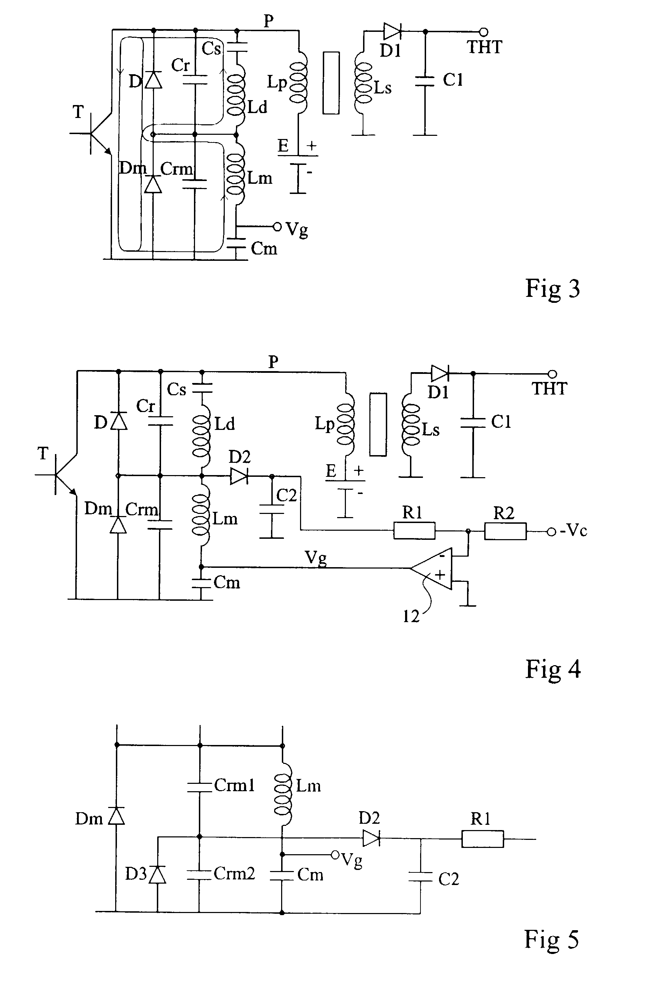

La figure 3 représente un tel circuit, appelé modulateur à diodes. Il comprend les mêmes éléments que le circuit de la figure 1, désignés par les mêmes références. Deux circuits oscillants de même constante de temps sont connectés en série entre les bornes de l'interrupteur T qui reste connecté entre le noeud P et la masse. L'un des circuits oscillants comprend les éléments Ld, Cs, Cr et D décrits en relation avec la figure 1. Le deuxième circuit oscillant comprend une inductance Lm, deux condensateurs Cm et Crm, et une diode Dm, homologues respectivement des éléments Ld, Cs, Cr, et D. Toutefois l'inductance Lm n'a aucune influence sur la déviation horizontale. Une tension de modulation Vg est imposée aux bornes du condensateur Cm. Cette tension de modulation est destinée à corriger le courant de balayage sans affecter la valeur de la haute tension.

Chacun des circuits oscillants fonctionne de manière indépendante et de manière similaire au cours d'un cycle de balayage. En effet, lorsque l'interrupteur T est fermé, l'inductance Lm se trouve connecté aux bornes du condensateur Cm, comme cela est illustré, par l'intermédiaire de la diode D et de l'interrupteur T, tandis que l'inductance de balayage Ld se retrouve connectée aux bornes du condensateur Cs, comme cela est illustré, par l'intermédiaire de la diode Dm et de l'interrupteur T. Lorsque l'interrupteur T est ouvert, le courant circule à l'intérieur de chacun des circuits oscillants comme cela a été décrit pour le seul circuit oscillant de la figure 1.

Avec cette configuration, le courant de balayage crête Ip s'exprime par (E-Vg)·t1/Ld. En effet, la tension aux bornes du condensateur Cs s'établit à la valeur E-Vg et non à la valeur E. Ainsi, l'amplitude du courant de balayage est réglable en agissant sur la tension de modulation Vg. En outre, la tension crête apparaissant sur le noeud P est égale à la somme des tensions crête aux bornes des deux circuits oscillants, à savoir :

$$Ip = (E-Vg) \cdot t1/\sqrt{(Ld \cdot Cr)} + Vg \cdot t1/\sqrt{(Lm \cdot Crm)}.$$

Ce courant est égal à $E \cdot t1/\sqrt{(Ld \cdot Cr)}$, puisque les constantes de temps Ld·Cr et Lm·Crm sont choisies égales. Ainsi, la valeur de la haute tension est indépendante de la tension de modulation Vg.

Toutefois, si on souhaite, dans le circuit de la figure 3, conserver les caractéristiques de l'image affichée lorsque la fréquence de balayage varie, il faut non seulement modifier la tension d'alimentation E proportionnellement à la fréquence, mais également la tension de modulation Vg. En effet, l'amplitude du courant de balayage est proportionnelle à E - vg.

Il est facile de faire varier la tension d'alimentation E en fonction de la fréquence de balayage, car cette tension est généralement produite par un convertisseur continu-continu synchronisé sur la fréquence de balayage et fonctionnant dans un mode tel qu'il produit une tension proportionnelle à sa fréquence de fonctionnement.

Par contre, pour rendre la tension de modulation Vg proportionnelle à la fréquence, on utilise généralement un convertisseur fréquence-tension et un multiplieur qui multiplie une tension de consigne indépendante de la fréquence par la sortie du convertisseur fréquence/tension. Cette solution est complexe et peu précise.

Un objet de la présente invention est de prévoir un circuit de balayage ligne permettant de rendre la tension de modulation proportionnelle à la fréquence de manière particulièrement simple et précise.

Pour atteindre cet objet, la présente invention prévoit un circuit de balayage ligne d'un tube cathodique, comprenant, en série entre les bornes d'un interrupteur, deux circuits oscillants de même constante de temps comportant chacun, en parallèle, un condensateur, une diode connectée en anti-parallèle, et une association série d'une inductance et d'une source de tension, l'inductance d'un premier des circuits oscillants étant une bobine de balayage du tube cathodique ; et des moyens pour régler la source de tension du deuxième circuit oscillant. Les moyens de réglage comprennent un amplificateur recevant une tension de consigne et utilisant, en tant que contre-réaction, une tension prélevée sur l'un des circuits oscillants.

Selon un mode de réalisation de la présente invention, la tension de contre-réaction est la tension crête aux bornes du deuxième circuit oscillant.

Selon un mode de réalisation de la présente invention, la tension de contre-réaction est une tension prélevée entre deux condensateurs connectés en série et constituant le condensateur du deuxième circuit oscillant.

Selon un mode de réalisation de la présente invention, l'amplificateur comprend un amplificateur opérationnel dont l'entrée inverseuse reçoit une tension de consigne négative par une première résistance et la tension de contre-réaction par une deuxième résistance.

Selon un mode de réalisation de la présente invention, le circuit comprend un détecteur de crête comportant une diode connectée en série avec un condensateur.

Selon un mode de réalisation de la présente invention, la source de tension du premier circuit oscillant est constituée d'un condensateur maintenu chargé par une source de tension d'alimentation connectée en série avec l'enroulement primaire d'un transformateur élévateur entre les bornes de l'interrupteur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente un circuit de balayage ligne classique ;
la figure 2 représente des signaux illustrant le fonctionnement du circuit de la figure 1 ;
la figure 3 représente un circuit de balayage ligne classique appelé modulateur à diodes ;
la figure 4 représente un mode de réalisation de circuit de balayage selon l'invention ; et
la figure 5 représente une variante de connexion d'un détecteur de crête de la figure 4.

Afin d'obtenir une tension de modulation variant proportionnellement à la fréquence de balayage dans un circuit de balayage ligne à modulateur à diodes, on utilise selon l'invention une valeur de tension proportionnelle à la période de balayage prélevée dans le circuit. Cette valeur de tension est, dans un mode de réalisation, la valeur crête prélevée entre la bobine de balayage Ld et la bobine de modulation Lm de la figure 3.

La figure 4 représente un mode de réalisation de circuit de balayage ligne utilisant ce principe. Dans cette figure, des mêmes éléments qu'à la figure 3 sont désignés par des mêmes références. Un détecteur de crête constitué d'une diode D2 et d'un condensateur C2 prélève la tension crête présente entre les bobines Ld et Lm. L'anode de la diode D2 est connectée aux bobines Ld et Lm tandis que la cathode de cette diode est reliée à la masse par l'intermédiaire du condensateur C2. Avec cette configuration, on obtient aux bornes du condensateur C2 une tension sensiblement continue égale à la valeur crête positive apparaissant entre les bobines Ld et Lm. Rappelons que cette valeur crête est égale à Vg·t1/√(Lm·Crm).

Cette tension est fournie en contre-réaction à l'entrée inverseuse d'un amplificateur opérationnel 12 par l'intermédiaire d'une résistance R1. Cette même entrée inverseuse reçoit une tension de consigne négative -Vc par l'intermédiaire d'une résistance R2. La tension de consigne -Vc est celle que l'on veut indépendante de la fréquence horizontale pour effectuer les réglages d'amplitude du courant de balayage qui s'imposent (réglage de la taille horizontale de l'image et correction de distorsion).

La sortie de l'amplificateur opérationnel 12 fournit la tension de modulation Vg imposée aux bornes du condensateur Cm. L'entrée non-inverseuse de l'amplificateur 12 reçoit une tension de référence, par exemple la tension de masse.

Avec cette configuration, l'amplificateur opérationnel 12 fournit une tension Vg telle que la tension sur son entrée inverseuse soit nulle. En d'autres termes, on a :

$$\frac{Vg \cdot t1}{R1\sqrt{Lm \cdot Crm}} = \frac{Vc}{R2}$$

ou encore

$$Vg = \frac{R1\sqrt{Lm \cdot Crm}}{R2 \cdot t1}Vc \ .$$

Il découle de cette dernière relation que la tension de modulation Vg est proportionnelle, comme cela est recherché, au produit de la fréquence de balayage par la tension de consigne Vc. En effet, le temps t1, qui apparaît au dénominateur, est sensiblement égal à la demi-période de balayage.

L'entrée inverseuse de l'amplificateur opérationnel 12 constitue une masse virtuelle permettant au condensateur C2 de se décharger par la résistance R1, ce qui est nécessaire pour que la tension aux bornes de ce condensateur C2 suive les évolutions de la tension crête apparaissant entre les bobines Ld et Lm. Les valeurs de la résistance R1 et du condensateur C2 sont choisies pour que la vitesse de décharge soit modérée et que la tension aux bornes du condensateur C2 puisse être considérée comme continue. On pourra bien entendu utiliser d'autres types connus de détecteur de crête.

La figure 5 représente une variante de connexion du détecteur de crête D2/C2 permettant de réduire la valeur crête mesurée si cela s'avère nécessaire. Le condensateur Crm est remplacé par deux condensateurs Crm1 et Crm2 connectés en série, la diode de détection D2 étant connectée entre ces deux condensateurs. On obtient ainsi un diviseur capacitif de la tension crête. Une diode D3 est connectée en antiparallèle sur le condensateur Crm2 pour restituer, pendant le balayage, la charge transmise au condensateur C2 pendant le retour.

## Revendications

1. Circuit de balayage ligne d'un tube cathodique, comprenant :

   - en série entre les bornes d'un interrupteur (T), deux circuits oscillants de même constante de temps comportant chacun, en parallèle, un condensateur (Cr, Crm), une diode connectée en anti-parallèle (D, Dm), et une association série d'une inductance (Ld, Lm) et d'une source de tension (Cs, Cm), l'inductance (Ld) d'un premier des circuits oscillants étant une bobine de balayage du tube cathodique ; et
   - des moyens (12) pour régler la source de tension (Cm) du deuxième circuit oscillant ;

   caractérisé en ce que lesdits moyens de réglage comprennent un amplificateur (12) recevant une tension de consigne (Vc) et utilisant, en tant que contre-réaction, la tension crête prélevée aux bornes du deuxième circuit oscillant (Lm, Crm).

2. Circuit de balayage ligne selon la revendication 1, caractérisé en ce que la tension de contre-réaction est une tension prélevée entre deux condensateurs connectés en série (Crm1, Crm2) et constituant le condensateur du deuxième circuit oscillant.

3. Circuit de balayage ligne selon la revendication 1 ou 2, caractérisé en ce que l'amplificateur comprend un amplificateur opérationnel (12) dont l'entrée inverseuse reçoit une tension de consigne négative (-Vc) par une première résistance (R2) et la tension de contre-réaction par une deuxième résistance (R1).

4. Circuit de balayage ligne selon la revendication 1 ou 2, caractérisé en ce qu'il comprend un détecteur de crête comportant une diode (D2) connectée en série avec un condensateur (C2).

5. Circuit de balayage ligne selon l'une quelconque des revendications 1 à 4, caractérisé en ce que la source de tension du premier circuit oscillant est constituée d'un condensateur (Cs) maintenu chargé par une source de tension d'alimentation (E) connectée en série avec l'enroulement primaire (Lp) d'un transformateur élévateur (10) entre les bornes de l'interrupteur (T).

Fig 1

Fig 2

6

Fig 3

Fig 4

Fig 5

**Office européen des brevets**

**RAPPORT DE RECHERCHE EUROPEENNE**

Numéro de la demande

EP 99 41 0120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | GB 2 186 164 A (RCA CORP) 5 août 1987 (1987-08-05) * page 3, ligne 62 - ligne 70 * * page 4, ligne 45 - ligne 51; figures 1,3 * | 1,2,5 | H04N3/27 H04N3/233 |
| A | US 5 717 296 A (KOIKE MASATOSHI ET AL) 10 février 1998 (1998-02-10) * colonne 9, ligne 16 - ligne 34; figure 7 * | 1 | |
| A | US 4 945 292 A (ACKERSON BRUCE D ET AL) 31 juillet 1990 (1990-07-31) * colonne 2, ligne 54 - colonne 3, ligne 5; figure 2 * | 1 | |
| A | EP 0 398 598 A (SONY CORP) 22 novembre 1990 (1990-11-22) * colonne 2, ligne 6 - ligne 38 * | 1 | |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 1 novembre 1999 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 991 267 A1

**ANNEXE AU RAPPORT DE RECHERCHE EUROPEENNE
RELATIF A LA DEMANDE DE BREVET EUROPEEN NO.**

EP 99 41 0120

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-11-1999

| Document brevet cité au rapport de recherche | Date de publication | Membre(s) de la famille de brevet(s) | | Date de publication |
|---|---|---|---|---|
| GB 2186164 A | 05-08-1987 | DE | 3442819 A | 12-09-1985 |
| | | DK | 555884 A,B, | 24-05-1985 |
| | | FI | 844512 A,B, | 24-05-1985 |
| | | FR | 2555386 A | 24-05-1985 |
| | | GB | 2150796 A,B | 03-07-1985 |
| | | HK | 41193 A | 07-05-1993 |
| | | HK | 43793 A | 14-05-1993 |
| | | IT | 1206470 B | 27-04-1989 |
| | | JP | 2868454 B | 10-03-1999 |
| | | JP | 8317244 A | 29-11-1996 |
| | | JP | 2556305 B | 20-11-1996 |
| | | JP | 60134562 A | 17-07-1985 |
| | | SE | 501700 C | 24-04-1995 |
| | | SE | 8405769 A | 24-05-1985 |
| | | US | 4634937 A | 06-01-1987 |
| US 5717296 A | 10-02-1998 | JP | 8307726 A | 22-11-1996 |
| | | JP | 9046544 A | 14-02-1997 |
| | | CN | 1141497 A | 29-01-1997 |
| US 4945292 A | 31-07-1990 | AUCUN | | |
| EP 0398598 A | 22-11-1990 | JP | 2301372 A | 13-12-1990 |
| | | JP | 2814556 B | 22-10-1998 |
| | | JP | 2301373 A | 13-12-1990 |
| | | JP | 2861046 B | 24-02-1999 |
| | | DE | 69023270 D | 07-12-1995 |
| | | DE | 69023270 T | 04-04-1996 |
| | | US | 5023523 A | 11-06-1991 |

EPO FORM P0460

Pour tout renseignement concernant cette annexe : voir Journal Officiel de l'Office européen des brevets, No.12/82

9